# EUROPEAN PATENT APPLICATION

(11) **EP 1 977 951 A2**
(43) Date of publication of application: **08.10.2008**
(21) Application number: 08006214.4
(22) Date of filing: 29.03.2008
(51) Int. Cl.: B62D 5/04

(54) **Vehicle steering system**

(30) Priority: 02.04.2007 JP 2007096576
(71) Applicant: JTEKT Corporation, Osaka-shi Osaka 542-8502 (JP)
(72) Inventor: Kurokawa, Takanori c/o JTEKT CORPORATION, Osaka 542-8502 (JP)
(74) Representative: Steil, Christian

(57) **Abstract**

A motor vehicle steering system (1) includes a transmission mechanism (26) for transmitting a power of an electric motor (25) to a steering mechanism (4). The transmission mechanism (26) includes an intermediate gear (32) meshed with a driving gear (31) and a driven gear (33). The intermediate gear (32) includes: an annular teeth forming portion (47) rotatably supported by an outer periphery (37a) of a support shaft (36) via a rolling bearing (63), the support shaft supported by a housing (23); and an annular elastic member (46) interposed between an inner periphery (47a) of the teeth forming portion (47) and an outer ring (63a) of the rolling bearing (63) and interconnecting the teeth forming portion (47) and the outer ring (63a) in a manner permitting torque transmission. An axis (P4) of the support shaft (36) and an axis (P2) of the teeth forming portion (47) are mutually offset, whereby an inner periphery (48a) of the elastic member (46) is located eccentrically to an outer periphery (48b) thereof. A pre-load to press the teeth forming portion (47) against the driving gear (31) and the driven gear (33) is provided by an elastic restorative force of the elastic member (46).

## Description

### BACKGROUND OF THE INVENTION

### Field of the Invention

The present invention relates to a motor vehicle steering system.

### Description of Related Arts

An electric power steering apparatus of a so-called rack-assist type is known as a motor vehicle steering system. The electric power steering apparatus of this type includes an electric motor for providing steering assist, a speed reducer and a ball screw mechanism. The ball screw mechanism includes a ball screw shaft and a ball nut. The ball screw shaft is coupled to a rack shaft constituting a part of a steering mechanism. An output from the electric motor is transmitted to the rack shaft via the speed reducer and the ball screw mechanism (see, for example, Japanese Unexamined Patent Publication No. 05(1993)-262243).

According to Japanese Unexamined patent publication No. 05(1993)-262243), the speed reducer includes a driving gear driven into rotation by an electric motor, a driven gear synchronously rotatably coupled to the ball nut and an intermediate gear interposed between the driving gear and the driven gear and meshed with these gears.

A meshing portion between the driving gear and the intermediate gear and a meshing portion between the driven gear and the intermediate gear are each provided with suitable degree of backlash. Gear teeth of the intermediate gear are normally formed of a synthetic resin or the like for the sake of noise reduction. However, the backlash may be sometimes increased due to wear or aging of the gear teeth of the intermediate gear. The increased backlash is liable to cause noises due to tooth surface to tooth surface collision (so-called gear rattle).

In view of the foregoing, the invention seeks to provide a motor vehicle steering system capable of preventing the occurrence of noises.

### SUMMARY OF THE INVENTION

For achieving the above object, the invention provides a motor vehicle steering system which comprises a transmission mechanism for transmitting a power of an electric motor to the steering mechanism. The above transmission mechanism includes a driving gear, a driven gear and an intermediate gear meshed with the driving gear and the driven gear. The intermediate gear includes an annular teeth forming portion rotatably supported by an outer periphery of a support shaft via a rolling bearing, the support shaft supported by a housing, and an annular elastic member interposed between an inner periphery of the teeth forming portion and an outer ring of the rolling bearing and interconnecting the teeth forming portion and the outer ring in a manner permitting torque transmission. An axis of the support shaft and an axis of the teeth forming portion are mutually offset, whereby an inner periphery of the elastic member is located eccentrically to an outer periphery thereof so as to allow the elastic deformation of the elastic member. A pre-load to press the teeth forming portion against the driving gear and the driven gear is provided by an elastic restorative force of the elastic member.

According to the invention, the axes of the support shaft and teeth forming portion are mutually offset, whereby the elastic member interposed between the teeth forming portion and the rolling bearing can be elastically deformed to elastically press the teeth forming portion against the driving gear and the driven gear. Thus, the backlashes between the driving gear and the intermediate gear and between the driven gear and the intermediate gear can be always maintained at zero. Accordingly, the noises caused by the tooth surface to tooth surface collision of the gear teeth can be prevented.

### BRIEF DESCRIPTION OF THE DRAWINGS

FIG.1 is a schematic diagram showing a general structure of an electric power steering apparatus as a motor vehicle steering system according to one embodiment of the invention;
FIG.2 is a sectional view showing a principal part of the electric power steering apparatus including a steering assist mechanism;
FIG.3 is a schematic enlarged sectional view showing an idle gear;
FIG.4A is a schematic sectional view showing a first sleeve and FIG.4B is a schematic plan view thereof;
FIG.5A is a schematic sectional view showing an elastic member and FIG.5B is a schematic plan view thereof;
FIG.6A is a schematic sectional view showing a second sleeve and a teeth forming portion and FIG.6B is a schematic plan view thereof;
FIG.7 is a schematic exploded sectional view showing the idle gear; and
FIG.8 is a conceptual diagram for explaining positional relations of a pinion gear, the idle gear and a reduction gear as seen in an axial direction of a rack shaft.

### DETAILED DESCRIPTION OF THE PREFERRED EMBODIMENT

An embodiment of the invention will hereinbelow be described in detail with reference to the accompanying drawings.

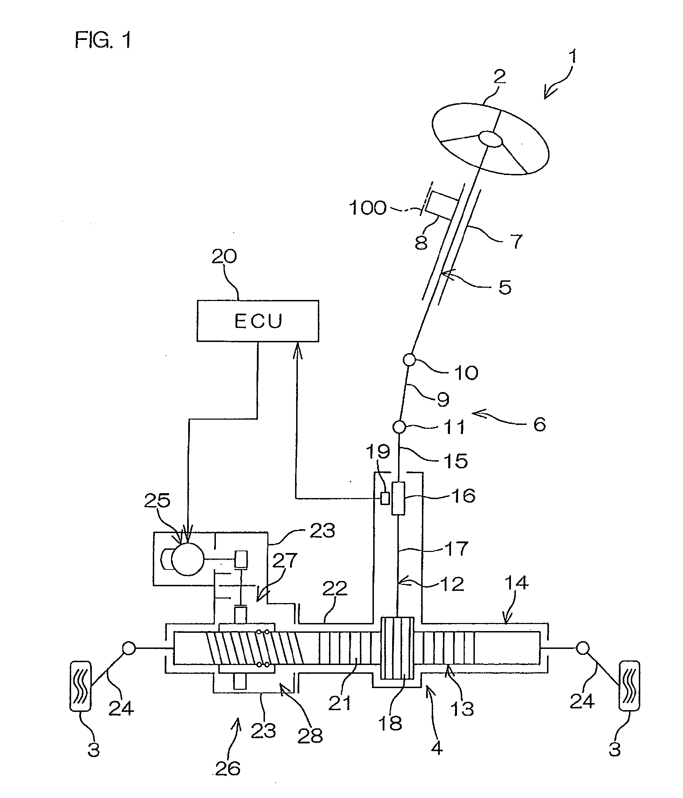

FIG. 1 is a schematic diagram showing a general structure of an electric power steering apparatus 1 as a motor vehicle steering system according to one embodiment of the invention.

Referring to FIG.1, the electric power steering apparatus 1 comprises a steering wheel 2 as a steering member steered (rotated) by a driver, a steering mechanism 4 operative to steer steerable vehicle wheels 3 in conjunction with the steering of the steering wheel 2, a steering shaft 5 and an intermediate shaft 6 connecting the steering wheel 2 to the steering mechanism 4 for transmitting a rotating motion of the steering wheel 2 to the steering mechanism 4.

The steering shaft 5 is inserted through a cylindrical steering column 7 and is rotatably supported therein. The steering shaft 5 is connected to the steering wheel 2 at one end thereof. The steering shaft 5 has the other end connected to the intermediate shaft 6. The steering column 7 is fixed to a portion 100 of a vehicle body by means of a bracket 8.

The intermediate shaft 6 includes a power transmission shaft 9, a first joint 10 disposed at one end of the power transmission shaft 9 and a second joint 11 disposed at the other end of the power transmission shaft 9. The one end of the power transmission shaft 9 is coupled to the steering shaft 5 via the first joint 10. The other end of the power transmission shaft 9 is coupled to the steering mechanism 4 via the second joint 11.

The steering mechanism 4 includes a pinion shaft 12 as an input shaft, a rack shaft 13 as an output shaft and a housing 14 for supporting the pinion shaft 12 and rack shaft 13. The intermediate shaft 6 is connected to the pinion shaft 12. The turning motion of the steering wheel 2 is transmitted to the pinion shaft 12 via the steering shaft 5 and intermediate shaft 6, whereby the pinion shaft 12 is rotated. An arrangement is made such that the rotating motion of the pinion shaft 12 is converted to an axial movement of the rack shaft 13. Thus, the steerable vehicle wheels 3 are steered.

The pinion shaft 12 includes an input shaft 15 connected to the intermediate shaft 6, and an output shaft 17 connected to the input shaft 15 via a torsion bar 16. A pinion 18 is formed at a distal end (a lower end in FIG.1) of the output shaft 17. The input shaft 15 and the output shaft 17 are aligned on the same axis and relatively rotatably interconnected via the torsion bar 16. Specifically, when the input shaft 15 receives a rotation torque about its axis, the torsion bar 16 transmits the rotation torque to the output shaft 17 while undergoing elastic torsional deformation.

A torque sensor 19 disposed at place around the torsion bar 16 detects a steering torque based on an amount of relative rotational displacement between the input shaft 15 and the output shaft 17 via the torsion bar 16. The torque detection result given by the torque sensor 19 is inputted to an ECU 20 (Electric Control Unit).

The rack shaft 13 extends in a transverse direction of an automobile (a horizontal direction perpendicular to a traveling direction thereof). The rack shaft 13 is formed with a rack 21 at an axially intermediate portion thereof, the rack 21 paired with the above pinion 18. The rotating motion of the pinion shaft 12 is converted to the axial movement of the rack shaft 13 by means of the pinion 18 and the rack 21.

The housing 14 includes a first housing 22 and a second housing 23 which are connected to each other. The first housing 22 and the second housing 23 are individually fixed to the portion 100 of the vehicle body not shown. The first housing 22 rotatably supports the pinion shaft 12. The first housing 22 and the second housing 23 define a cylindrical space in which a part of the rack shaft 13 is disposed. While partially disposed in the above cylindrical space, the rack shaft 13 is supported by the first and second housings 22, 23 in a linearly reciprocal manner.

The opposite ends of the rack shaft 13 project from the first housing 22 and the second housing 23, respectively. The opposite ends of the rack shaft 13 projecting from the housings 22, 23 are each connected with the steerable vehicle wheel 3 via a tie rod 24 and a knuckle arm not shown.

The steering mechanism 4 is adapted to be supplied with a steering assist force according to a steering torque and the like. That is, the electric power steering apparatus 1 comprises a steering assist mechanism for imparting the steering assist force to the steering mechanism 4. The steering assist mechanism includes an electric motor 25 for providing steering assist and a transmission mechanism 26 for transmitting the power of the electric motor 25 to the steering mechanism 4. The transmission mechanism 26 is designed to transmit the power to the rack shaft 13.

The transmission mechanism 26 includes a speed reduction mechanism 27 comprising a plurality of gears and a ball screw mechanism 28 as a converting mechanism for converting the rotation transmitted from the speed reduction mechanism 27 to the axial movement of the rack shaft 13. The speed reduction mechanism 27 and the ball screw mechanism 28 are accommodated in the second housing 23. The electric motor 25 is coupled to the second housing 23.

When the steering wheel 2 is steered, the steering torque is detected by the torque sensor 19. The torque detection result thus detected is inputted to the ECU 20. The ECU 20 controls the electric motor 25 based on this torque detection result, a vehicle speed inputted thereto from an unillustrated vehicle speed sensor and the like. Thus, the power based on the steering torque, vehicle speed and the like is outputted from the electric motor 25. The outputted power is amplified by the speed reduction mechanism 27 and the ball screw mechanism 28 and is transmitted to the rack shaft 13 as the steering assist force. Thus the steering operation by the driver is assisted.

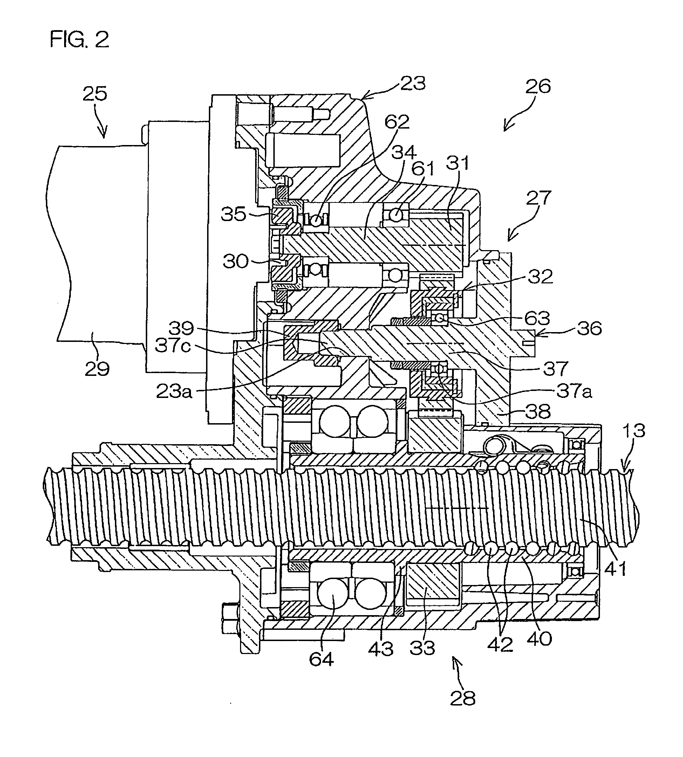

FIG.2 is a sectional view showing a principal part of the electric power steering apparatus 1 including the steering assist mechanism. Referring to FIG.2, the electric motor 25 includes a motor housing 29 and a rotary shaft 30 projecting from the motor housing 29. The electric motor 25 is disposed so as to direct the rotary shaft 30 in parallel to the rack shaft 13.

The speed reduction mechanism 27 includes a pinion gear 31 as a driving gear driven into rotation by the electric motor 25, an idle gear 32 as an intermediate gear driven into rotation by the pinion gear 31 and a reduction gear 33 as a driven gear driven into rotation by the idle gear 32.

Each of the gears 31 to 33 is an externally-toothed circular gear which is disposed such that a center axis thereof is in parallel to the rack shaft 13. Namely, the speed reduction mechanism 27 according to the embodiment is a parallel-axis gear mechanism. The pinion gear 31, idle gear 32 and reduction gear 33 may be spur gears, helical gears, double helical gears and the like.

The idle gear 32 is disposed between the pinion gear 31 and the reduction gear 33. The idle gear 32 is meshed with the pinion gear 31 and the reduction gear 33, respectively. The rotation of the pinion gear 31 is transmitted to the reduction gear 33 via the idle gear 32. The rotation transmitted to the reduction gear 33 is reduced in rotation speed from that of the pinion gear 31 but is increased in rotation torque from that of the pinion gear 31.

The pinion gear 31 is formed of, for example, a metal. The pinion gear 31 is coaxially and synchronously rotatably connected to the rotary shaft 30 of the electric motor 25 via a first support shaft 34 and a power transmitting joint 35. The first support shaft 34 extends linearly so as to be in coaxial relation with the rotary shaft 30 of the electric motor 25. The first support shaft 34 is rotatably retained by the second housing 23 via a pair of bearings 61, 62.

The pinion gear 31 is synchronously rotatably connected to one end of the first support shaft 34. According to the embodiment, the first support shaft 34 and the pinion gear 31 are formed as a single member. The other end of the first support shaft 34 is connected to the rotary shaft 30 of the electric motor 25 via the power transmitting joint 35. The first support shaft 34 and pinion gear 31 are adapted to rotate following the rotary shaft 30 of the electric motor 25. In this manner, the pinion gear 31 is driven into rotation by the electric motor 25.

The idle gear 32 is a cylindrical member comprising plural members. The idle gear 32 is rotatably supported by a second support shaft 36 via a bearing 63. The bearing 63 may be a rolling bearing. Specifically, a ball bearing, a roller bearing or the like may be used as the bearing 63. The embodiment employs a radial ball bearing as the bearing 63.

The second support shaft 36 includes a shaft portion 37 extended linearly and a plate-like end wall 38 perpendicularly intersecting the shaft portion 37. The shaft portion 37 is inserted through an inner periphery of the idle gear 32. The shaft portion 37 is in coaxial relation with the idle gear 32. The above bearing 63 is interposed between an outer periphery 37a of the shaft portion 37 and the inner periphery of the idle gear 32. Namely, the idle gear 32 is rotatably supported by the shaft portion 37 via the bearing 63. The idle gear 32 is allowed to rotate relative to the shaft portion 37 but is inhibited from moving axially. The end wall 38 is disposed at a distal end (the right-hand end in FIG.2) of the shaft portion 37. The shaft portion 37 and end wall 38 are integrally formed as a single member.

The shaft portion 37 has one end 37c inserted through a through-hole 23a formed in the second housing 23. A fastening member 39 is engaged with the one end 37c of the shaft portion 37. The end wall 38 is engaged with the second housing 23 so as to close an opening of the second housing 23. The second housing 23 is clamped by the end wall 38 and the fastening member 39. In this manner, the second support shaft 36 is fixed to the second housing 23.

The reduction gear 33 is an annular member formed of, for example, a metal. The reduction gear 33 is synchronously rotatably connected to a part (a ball nut 40 to be described hereinlater) of the ball screw mechanism 28. Specifically, the rotation of the reduction gear 33 can be transmitted to the part of the ball screw mechanism 28 by rotating the reduction gear.

The ball screw mechanism 28 includes the ball nut 40 driven into rotation by the reduction gear 33, a screw shaft 41 paired with the ball nut 40 and a plurality of balls 42 interposed between the ball nut 40 and the screw shaft 41.

The ball nut 40 is a cylindrical member coaxially enclosing the rack shaft 13. The ball nut 40 has an inner peripheral surface and an outer peripheral surface which have circular sectional shapes. The inner peripheral surface of the ball nut 40 is partially formed with a helical raceway groove. The outer peripheral surface of the ball nut 40 is formed with an engaging flange 43 engaged with the reduction gear 33.

The ball nut 40 is rotatably supported by the second housing 23 via a bearing 64. The bearing 64 is inhibited from moving axially relative to the ball nut 40. The bearing 64 is further inhibited from moving axially relative to the second housing 23. Therefore, the ball nut 40 is rotatably supported by the second housing 23 while inhibited from moving axially relative to the second housing 23.

The reduction gear 33 coaxially encloses the ball nut 40. The ball nut 40 and the reduction gear 33 are fixed to each other. The ball nut 40 functions as a third support shaft for supporting the reduction gear 33. The reduction gear 33 is engaged with the engaging flange 43, thereby being positioned on the ball nut 40 in an axial direction thereof.

The screw shaft 41 includes a helical raceway groove formed on an outer periphery of the rack shaft 13. Namely, a predetermined axial range of the rack shaft 13 defines the screw shaft 41. The plural balls 42 are disposed between the raceway groove of the ball nut 40 and the raceway groove of the screw shaft 41 in opposing relation to the raceway groove of the ball nut 40.

A structure of the idle gear 32 is described in detail below.

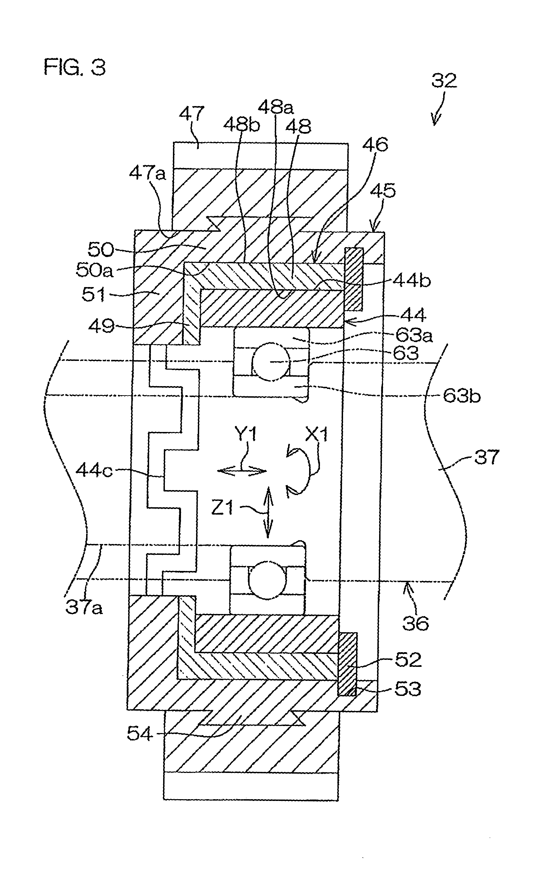

FIG.3 is a schematic enlarged sectional view showing the idle gear 32. In FIG.3, chain double-dashed lines delineate structures other than that of the idle gear 32. Referring to FIG.3, the idle gear 32 includes a first metal sleeve 44 synchronously rotatably coupled to an outer ring 63a of the bearing 63, a second metal sleeve 45 coaxially enclosing the first sleeve 44, a cylindrical elastic member 46 interposed between the first sleeve 44 and the second sleeve 45 and a cylindrical teeth forming portion 47 coaxially enclosing the second sleeve 45. The teeth forming portion 47 is formed with teeth on an outer periphery thereof.

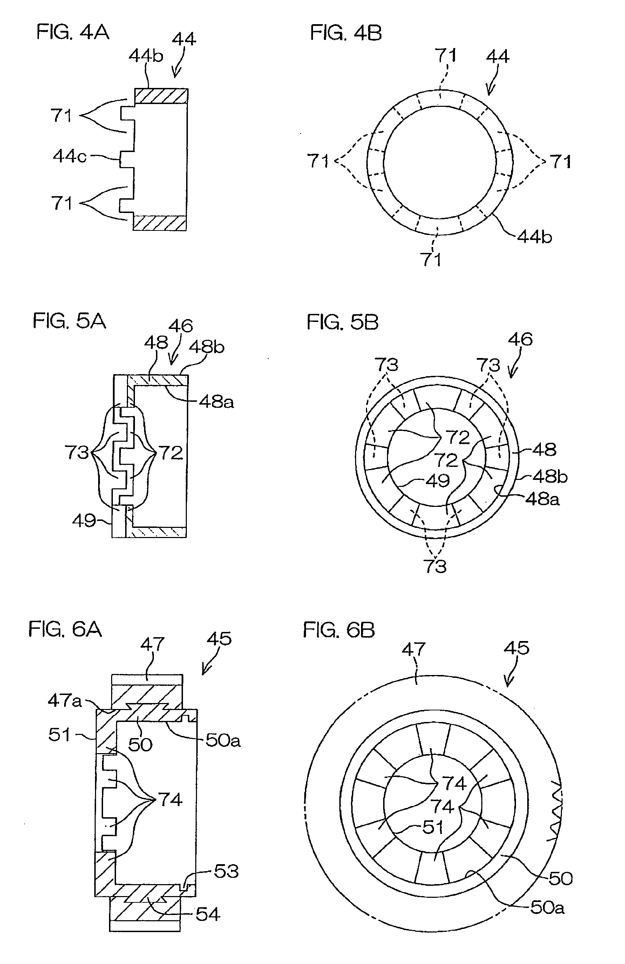

FIG.4A and FIG.4B are diagrams illustrating a structure of the first sleeve 44. FIG.5A and FIG.5B are diagrams illustrating a structure of the elastic member 46. FIG.6A and FIG.6B each illustrate structures of the second sleeve 45 and the teeth forming portion 47. FIG.4A, FIG.5A and FIG.6A schematically show respective radial sections of the corresponding members. FIG.4B, FIG.5B and FIG.6B schematically show respective plan views of the corresponding members.

Referring to FIG.4A and FIG.4B, the first sleeve 44 is a cylindrical metal member having a predetermined axial length. One end (the left-hand end in FIG.4A) of the first sleeve 44 is cut away at plural places. In other words, the one end of the first sleeve 44 is circumferentially formed with a plurality of recesses 71. The plural recesses 71 are formed generally in the same configuration. As seen in plan view, each of the plural recesses 71 is formed in an arcuate shape. One end face 44c (the left-hand end face in FIG.4A) of the first sleeve 44 defines a concavo-convex face recessed and protruded in an axial direction of the first sleeve 44.

Referring to FIG.3, FIG.5A and FIG.5B, the elastic member 46 is a cylindrical member formed of a relatively soft material such as a synthetic resin or synthetic rubber. The above synthetic resin may be a thermoplastic elastomer. Examples of the above synthetic rubber include nitrile rubber (NBR), butadiene rubber (BR), styrene-butadiene rubber (SBR), chloroprene rubber (CR), fluorine-containing rubber (FR) and the like.

The elastic member 46 includes a cylindrical portion 48 having generally the same axial length as that of the first sleeve 44 and an annular end wall 49 extended radially inwardly from one end (the left-hand end in FIG.5A) of the cylindrical portion 48. As seen in a circumferential direction of the cylindrical portion 48, the end wall 49 has a concavo-convex shape recessed and protruded in an axial direction of the cylindrical portion 48.

Specifically, one end face (the right-hand end face of the end wall 49 in FIG.5A) of the end wall 49 is formed with a plurality of protrusions 72 which are protruded toward one side (the right-hand side in FIG. 5A) in the axial direction of the cylindrical portion 48 and are arranged with equal spacing in the circumferential direction of the cylindrical portion 48. The other end face (the left-hand end face of the end wall 49 in FIG.5A) is formed with a plurality of recesses 73 which are recessed toward the one side in the above axial direction and are arranged with equal spacing in the circumferential direction of the cylindrical portion 48. According to the embodiment, the protrusion 73 and the recess 73 are unified (The recess 73 is formed inside the protrusion 72).

The plural protrusions 72 are formed generally in the same configuration. As seen in plan view, each of the plural protrusions 72 is formed in an arcuate shape. Each of the protrusions 72 is adapted to fit in the recess 71 of the first sleeve 44. The plural recesses 73 of the elastic member 46 are formed generally in the same configuration. As seen in plan view, each of the plural recesses 73 is formed in an arcuate shape.

Referring to FIG.3, FIG.6A and FIG.6B, the second sleeve 45 is formed of, for example, a metal. The second sleeve 45 includes a cylindrical portion 50 having a predetermined axial length and an annular end wall 51 extended radially inwardly from one end (the left-hand end in FIG.6A) of the cylindrical portion 50. The cylindrical portion 50 has a greater axial length than those of the first sleeve 44 and elastic member 46. The end wall 51 of the second sleeve 45 has generally the same inside diameter as that of the end wall 49 of elastic member 46.

An inner periphery 50a of the cylindrical portion 50 is formed with an annular groove 53 fitted with a snap ring 52. A locking projection 54 is formed on an outer periphery of the cylindrical portion 50. One end face (the right-hand end face of the end wall 51 in FIG.6A) of the end wall 51 is formed with a plurality of protrusions 74 which are protruded toward one side (the right-hand side in FIG.6A) in an axial direction of the cylindrical portion 50 and are arranged with equal spacing in a circumferential direction of the cylindrical portion 50. The plural protrusions 74 are formed generally in the same configuration. As seen in plan view, each of the plural protrusions 74 is formed in an arcuate shape. Each of the protrusions 74 is adapted to fit in the recess 73 of the elastic member 46.

The teeth forming portion 47 is a cylindrical member formed of a relatively hard material such as a synthetic resin. Examples of the above synthetic resin include polyamide resin (PA), polyacetal resin (POM), polybutylene terephthalate (PBT), polyethylene terephthalate (PET), polyphenylene sulfide (PPS), polyether ether ketone (PEEK), thermoplastic polyimide (TPI) and the like.

The teeth forming portion 47 has a smaller axial length than that of the cylindrical portion 50 of the second sleeve 45. The teeth forming portion 47 coaxially encloses the cylindrical portion 50 of the second sleeve 45. Namely, the cylindrical portion 50 of the second sleeve 45 is disposed in an inner periphery 47a of the teeth forming portion 47. The teeth forming portion 47 is located at place corresponding to an axially intermediate portion of the cylindrical portion 50.

The teeth forming portion 47 is fixed to the cylindrical portion 50 of the second sleeve 45. Specifically, the teeth forming portion 47 is fixed to the cylindrical portion 50 of the second sleeve 45 by insert molding, for example. The rotation or axial movement of the teeth forming portion 47 relative to the second sleeve 45 is assuredly prevented by the locking projection 54 formed on the second sleeve 45. This ensures that the torque is transmitted from the teeth forming portion 47 to the second sleeve 45.

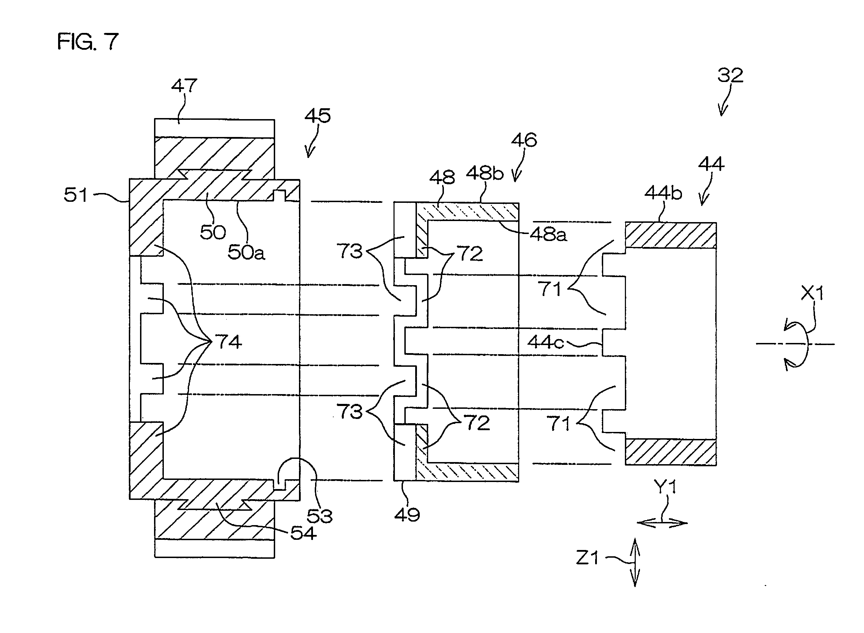

FIG.7 is a schematic exploded sectional view showing the idle gear 32. Referring to FIG.3 and FIG.7, the elastic member 46 is retained by the second sleeve 45 in the cylindrical portion 50 of the second sleeve 45. While elastically deformed radially inwardly, the cylindrical portion 48 of the elastic member 46 is fitted in the inner periphery 50a of the cylindrical portion 50 of the second sleeve 45.

The end wall 49 of the elastic member 46 is in engagement with the end wall 51 of the second sleeve 45 so as to mesh with each other. Specifically, the individual protrusions 74 formed on the end wall 51 of the second sleeve 45 are tightly fitted in the corresponding recesses 73 formed on the end wall 49 of the elastic member 46. The individual protrusions 74 and the corresponding recesses 73 are in tight contact with each other in a rotational direction X1 (the same as the circumferential direction of the idle gear 32) of the idle gear 32 and an axial direction Y1 thereof.

On the other hand, the first sleeve 44 is retained by the second sleeve 45 in the cylindrical portion 48 of the elastic member 46. The first sleeve 44 is elastically fitted in an inner periphery of the cylindrical portion 48 of the elastic member 46. Specifically, the first sleeve 44 is fitted in the cylindrical portion 48 of the elastic member 46, whereby an inner periphery 48a of the cylindrical portion 48 is elastically deformed radially outwardly.

The one end of the first sleeve 44 (the left-hand end in FIG.3 and FIG.7) is in engagement with the end wall 49 of the elastic member 46 so as to mesh therewith. Specifically, the individual protrusions 72 formed on the end wall 49 of the elastic member 46 are tightly fitted in the corresponding recesses 71 formed on the first sleeve 44. The individual protrusions 72 and the corresponding recesses 71 are in tight contact with each other in the rotational direction X1 and the axial direction Y1 of the idle gear 32.

As shown in FIG.3, the end wall 49 of the elastic member 46 is clamped by the end face 44c of the first sleeve 44 and the end wall 51 of the second sleeve 45 in the axial direction Y1 of the idle gear 32.

Referring to FIG.3, the respective end faces (the right-hand end faces in FIG. 3) of the elastic member 46 and first sleeve 44 are engaged with the snap ring 52 fitted in the annular groove 53 of the second sleeve 45. This snap ring 53 prevents the elastic member 46 and the first sleeve 44 from disengaging from the second sleeve 45. The outer ring 63a of the bearing 63 is fixed in an inner periphery of the first sleeve 44 by press fit, for example. An inner ring 63b of the bearing 63 is fitted on the outer periphery 37a of the shaft portion 37 of the second support shaft 36. The inner ring 63b of the bearing 63 is inhibited from moving axially relative to the shaft portion 37 but is allowed to rotate together therewith.

The idle gear 32 is capable of transmitting the rotation torque, inputted to the teeth forming portion 47 thereof, to the outer ring 63a of the bearing 63 via the second sleeve 45, elastic member 46 and first sleeve 44. Specifically, the rotation torque inputted to the teeth forming portion 47 is transmitted to the second sleeve 45 and then is transmitted to the first sleeve 44 via the protrusions 74 of the second sleeve 45, the recesses 73 and protrusions 72 of the elastic member 46 and the recesses 71 of the first sleeve 44. The rotation torque transmitted to the first sleeve 44 is transmitted to the outer ring 63a of the bearing 63. That is, the above-described protrusions 72, 74 and recesses 71, 73 function as power transmitting joints for transmitting the rotation torque. The engagement between these protrusions 72, 74 and recesses 71, 73 can achieve the transmission of a great torque.

The teeth forming portion 47 and the second sleeve 45 are elastically supported by the end wall 49 of the elastic member 46 in the rotational direction X1 and axial direction Y1 of the idle gear 32. Further, the teeth forming portion 47 and the second sleeve 45 are elastically supported by the cylindrical portion 48 of the elastic member 46 in a radial direction Z1 of the idle gear 32. That is, the above-described protrusions 72, 74 and recesses 71, 73 also function as elastic joints which transmit the torque from the teeth forming portion 47 while elastically supporting the teeth forming portion 47. This permits the elastic member 46 to absorb the vibrations of the teeth forming portion 47 in the rotational direction X1, axial direction Y1 and radial direction Z1, thereby damping the vibrations. Therefore, the noises caused by the vibrations of the teeth forming portion 47 can be prevented.

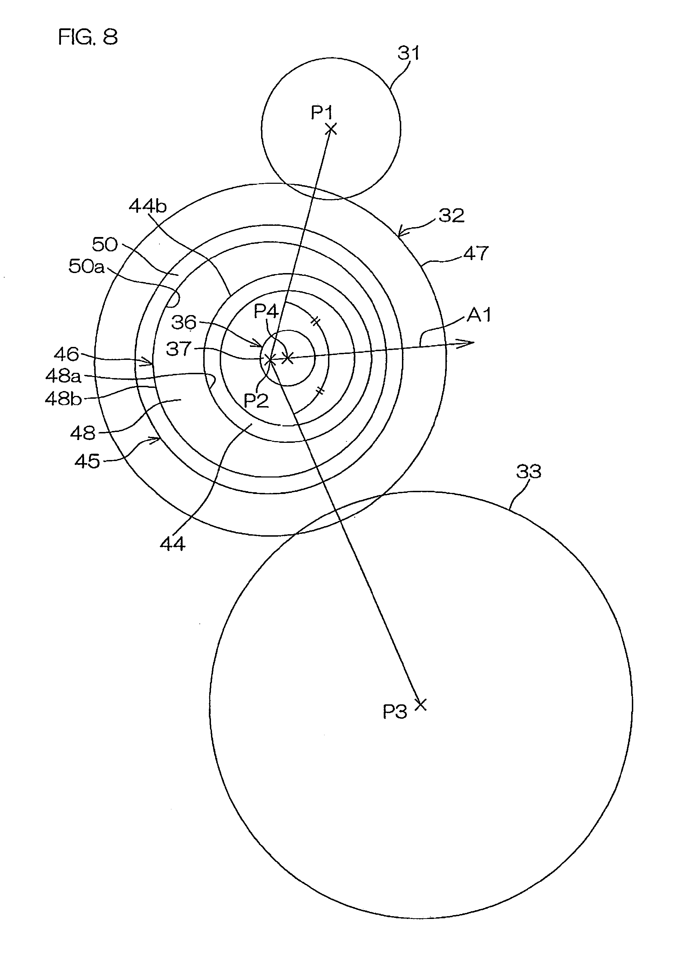

FIG.8 is a conceptual diagram for explaining positional relations of the pinion gear 31, the idle gear 32 and the reduction gear 33 as seen in an axial direction of the rack shaft 13. Referring to FIG.3 and FIG.8, the idle gear 32 is disposed between the pinion gear 31 and the reduction gear 33 as described in the foregoing. Specifically, an axis P1 of the pinion gear 31, an axis p2 (an axis of the teeth forming portion 47) of the idle gear 32 and an axis P3 of the reduction gear 33 are not located on a straight line but at respective vertices of a predetermined triangle.

The position of an axis P4 of the second support shaft 36 rotatably supporting the idle gear 32 does not coincide with the position of the axis P2 of the teeth forming portion 47. Namely, the axis P4 of the second support shaft 36 is located at the position offset by a predetermined amount from the position of the axis P2 of the teeth forming portion 47 in a predetermined direction A1. The above predetermined direction A1 is a direction which approaches the pinion gear 31 and reduction gear 33 and which bisects an angle formed between a line connecting the axis P1 of the pinion gear 31 with the axis P2 of the teeth forming portion 47 and a line connecting the axis P3 of the reduction gear 33 with the axis P2 of the teeth forming portion 47.

The axis P4 of the second support shaft 36 is offset in the predetermined direction A1 by the predetermined offset amount, whereby an axis of the first sleeve 44 is also offset in the same way as the axis P4 of the second support shaft 36. Specifically, the axis of the first sleeve 44 is located at a position offset from the position of the axis P2 of the teeth forming portion 47 by the same offset amount as that of the axis P4 of the second support shaft 36 in the same direction (the predetermined direction A1) as that of the axis P4 of the second support shaft. At this time, the inner periphery 48a of the cylindrical portion 48 of the elastic member 46 conforms to an outer periphery 44b of the first sleeve 44. On the other hand, an outer periphery 48b of the elastic member 46 conforms to the inner periphery 50a of the cylindrical portion 50 of the second sleeve 45.

In other words, the axis P4 of the second support shaft 36 is offset in the predetermined direction A1 by the predetermined offset amount, so that the inner periphery 48a of the cylindrical portion 48 of the elastic member 46 is located eccentrically to the outer periphery 48b thereof by a predetermined eccentricity amount corresponding to the above predetermined offset amount. The cylindrical portion 48 of the elastic member 46 is elastically deformed by an elastic deformation amount corresponding to the eccentricity amount. An elastic repulsive force of the elastic member 46 induced by the elastic deformation is applied to the second sleeve 45. Thus, the second sleeve 45 and the teeth forming portion 47 are urged in the direction toward the pinion gear 31 and the reduction gear 33. Then, the teeth forming portion 47 is elastically pressed against the pinion gear 31 and the reduction gear 33 by the urging force applied by the elastic member 46.

The teeth forming portion 47 is elastically pressed against the pinion gear 31 and the reduction gear 33, whereby the backlashes at the meshing portion between the pinion gear 31 and the idle gear 32 and at the meshing portion between the reduction gear 33 and the idle gear 32 are always maintained at zero. This ensures that the noises due to the tooth surface to tooth surface collision of the gears 31 to 33 can be prevented even if an inverted input from road surface, for example, is transmitted to the electric power steering apparatus 1 via the steerable vehicle wheels 3.

Even though the backlashes at the meshing portion of the gears 31 to 33 are at zero, the pressure of the teeth forming portion 47 on the pinion gear 31 and the reduction gear 33 may be set to a proper value by adjusting the offset amount of the axis P4 of the second support shaft 36, so that the rotation can be smoothly transmitted from the pinion gear 31 to the reduction gear 33.

Further, the speed reduction mechanism 27 can be improved in assemblability because the above-described backlashes can be always maintained at zero by offsetting the axis P4 of the second support shaft 36. In other words, it is not necessary to carry out a stringent control of the above-described backlashes in order to reduce the noises from the speed reduction mechanism 27.

A variety of changes or modifications may be made to the invention. While the above embodiment illustrates the case where the speed reduction mechanism 27 comprises the parallel-axes gear mechanism, the invention is not limited to this. For example, an intersecting-axes gear mechanism comprising bevel gears or the like, and a skew gear mechanism comprising a worm, a worm wheel and the like are usable as the speed reduction mechanism 27.

According to the above embodiment, as the material for forming the teeth forming portion 47, the synthetic resins and synthetic rubbers are shown but the material is not limited to these. The teeth forming portion 47 may be formed of any other member such as metal.

While the invention has been described in greater details with reference to the specific example thereof, it is apparent that changes, modifications and equivalents thereof will occur to those skilled in the art who have understood the above contents. The scope of the invention, therefore, is defined by the appended claims and their equivalents.

## Claims

1. A motor vehicle steering system (1) comprising a transmission mechanism (26) for transmitting a power of an electric motor (25) to a steering mechanism (4),
wherein the transmission mechanism (26) includes a driving gear (31), a driven gear (33) and an intermediate gear (32) meshed with the driving gear (31) and the driven gear (33),
wherein the intermediate gear (32) includes: an annular teeth forming portion (47) rotatably supported by an outer periphery (37a) of a support shaft (36) via a rolling bearing (63), the support shaft supported by a housing (23); and an annular elastic member (46) interposed between an inner periphery (47a) of the teeth forming portion (47) and an outer ring (63a) of the rolling bearing (63) and interconnecting the teeth forming portion (47) and the outer ring (63a) so as to permit torque transmission therebetween,
wherein an axis (P4) of the support shaft (36) and an axis (P2) of the teeth forming portion (47) are mutually offset, whereby an inner periphery (48a) of the elastic member (46) is located eccentrically to an outer periphery (48b) of the elastic member (46) so as to allow elastic deformation of the elastic member (46), and
wherein a pre-load to press the teeth forming portion (47) against the driving gear (31) and the driven gear (33) is provided by an elastic restorative force of the elastic member (46).

2. A motor vehicle steering system according to Claim 1, wherein the teeth forming portion (47) is elastically supported in axial, radial and rotational directions via the elastic member (46).

3. A motor vehicle steering system according to Claim 1 or 2, wherein the intermediate gear (32) includes a first metal sleeve (44) and a second metal sleeve (45),
wherein the first sleeve (44) is rotatable together with the outer ring (63a) of the rolling bearing (63),
wherein the second sleeve (45) is fitted in the inner periphery (47a) of the teeth forming portion (47) so as to be rotatable together with the teeth forming portion (47), and
wherein the first sleeve (44) and the second sleeve (45) are interconnected via the elastic member (46) so as to permit torque transmission therebetween.

4. A motor vehicle steering system according to Claim 3, wherein the elastic member (46) includes a cylindrical portion (48) interposed between an outer periphery (44b) of the first sleeve (44) and an inner periphery (50a) of the second sleeve (45), and an end wall (49) extended from one end of the cylindrical portion (48),
wherein the second sleeve (45) includes a cylindrical portion (50) and an end wall (51) extended from one end of the cylindrical portion (50), and
wherein the end wall (49) of the elastic member (46) is axially clamped between an end face of the first sleeve (44) and the end wall (51) of the second sleeve (45).

5. A motor vehicle steering system according to Claim 3 or 4, wherein the elastic member (46) includes a protrusion (72) or a recess (73) elastically engaged with each of the first sleeve (44) and the second sleeve (45) so as to permit torque transmission.
